# EUROPÄISCHE PATENTANMELDUNG

(11) **EP 4 091 900 A1**
(43) Veröffentlichungstag der Anmeldung: **23.11.2022**
(21) Anmeldenummer: 22171546.9
(22) Anmeldetag: 04.05.2022
(51) Int. Cl.: B61D 17/22, B60D 5/00, G10K 11/16

(54) **ÜBERGANGSSYSTEM MIT SCHALLABSORBER**

(30) Priorität: 20.05.2021 DE 102021205166
(71) Anmelder: Hübner GmbH & Co. KG, 34123 Kassel (DE)
(72) Erfinder: Tatzel, Stefan, 34277 Fuldabrück (DE); Hoffmann, Sabine, 34225 Baunatal (DE); Kunze, Andreas, 34212 Melsungen (DE)

(57) **Zusammenfassung**

Die Erfindung betrifft ein Übergangssystem (1) zur Anordnung zwischen zwei beweglich miteinander verbundenen Fahrzeugen. Das Übergangssystem (1) umfasst einen Balg (2), der sich in Durchgangsrichtung (4) des Übergangssystems (1) erstreckt und durch den ein Innenraum (6) des Übergangssystems (1) von einem Bereich (7) außerhalb des Übergangssystems (1) getrennt ist. Ferner umfasst das Übergangssystem (1) mindestens ein Flächenelement (11), das im Innenraum (6) beabstandet zu dem Balg (2) angeordnet ist und das derart ausgebildet ist, dass es im Betrieb auftretenden Relativbewegungen der beiden miteinander verbundenen Fahrzeuge folgen kann. Zwischen dem Balg (2) und dem Flächenelement (11) ist ein Zwischenraum (17) gebildet. Erfindungsgemäß ist in dem Zwischenraum (17) mindestens ein Schallabsorber (18) angeordnet.

## Beschreibung

Die Erfindung betrifft ein Übergangssystem zur Anordnung zwischen zwei beweglich miteinander verbundenen Fahrzeugen mit den Merkmalen des Oberbegriffs von Anspruch 1.

### STAND DER TECHNIK

Für einen hohen Komfort der Passagiere werden typischerweise hohe Anforderungen an die Schalldämmung von Übergangssystemen gestellt. Hierzu ist es insbesondere aus dem Bereich der Hochgeschwindigkeitszüge bekannt, ein Übergangssystem nicht nur mit einem, sondern mit einem Innen- und einem Außenbalg aufzubauen, wie das beispielhaft aus der EP 2 335 995 B1 bekannt ist.

Ferner ist es bekannt, für den Balg des Übergangssystems besonders schalldämmende Balgmaterialien auszuwählen. Beispielsweise können diese mit einer schalldämmenden Lage versehen sein. Insgesamt führt dies jedoch zu dickeren, schwereren und auch teureren Bälgen. Darüber hinaus sind aus der DE 198 21 083 B1 schallgedämmte Bälge bekannt, bei denen einander überlappende Laschen an der Innenseite der wellenförmigen Balgelemente eines Wellenbalges angebracht sind.

Auch ist bekannt, ein Übergangssystem nicht mit einem Balg aus einem Balgmaterial auszurüsten, sondern stattdessen für die Wandungen des Übergangssystems, durch den dessen Innenraum vom Bereich außerhalb getrennt ist, schalldämmende Matten zu verwenden, wie dies in der DE 10 57 639 A beschrieben ist.

Aus dem Dokument EP 3 494 022 A1 ist es bekannt, im Bereich einer Stirnwand eines Wagenkastens eine schallabsorbierende Schalldämmschicht aufzubringen, die in einen Zwischenraum zwischen Innen- und Außenbalg des Übergangssystems hineinragt.

### OFFENBARUNG DER ERFINDUNG

Aufgabe der Erfindung ist es, ein Übergangssystem aufzuzeigen, bei dem der Schallschutz weiter optimiert ist, insbesondere ohne die Beweglichkeit des Übergangssystems einzuschränken.

Die erfindungsgemäße Aufgabe wird gelöst durch ein Übergangssystem mit den Merkmalen des unabhängigen Anspruchs 1.

Erfindungsgemäß wurde erkannt, dass es für die Optimierung der Schalldämmung bei einem Übergangssystem - anders als aus dem Stand der Technik bekannt - nicht zwingend erforderlich ist, im Bereich des Balgs des Übergangssystems die Schalldämmeigenschaften zu verbessern. Vielmehr kann eine Verbesserung der insgesamt erreichbaren Schalldämmung auch durch Maßnahmen im Bereich von anderen Bauteilen des Übergangssystems bzw. in gebildeten Zwischenräumen erreicht werden. Dies hat insbesondere den Vorteil, dass - anders als bei den aus dem Stand der Technik bekannten Lösungen - im Gegenzug keine wesentlichen Einschränkungen in der Beweglichkeit des Balgs und somit des Übergangssystems in Kauf genommen werden müssen.

Ein erfindungsgemäßes Übergangssystem lässt sich zwischen zwei beweglich miteinander verbundenen Fahrzeugen anordnen, so dass Passagiere geschützt von einem Fahrzeug zum anderen Fahrzeug wechseln können. Das Übergangssystem kann z. B. Teil eines Schienenfahrzeugs mit mindestens zwei gelenkig oder durch eine Kupplung miteinander verbundenen Fahrzeugen sein. Es kann sich aber auch um ein Übergangssystem für einen Bus handeln, durch das zwei Fahrzeuge des Busses miteinander verbunden sind. Die Fahrzeuge können dabei entweder jeweils auch einzeln fahrtüchtig sein. Es kann sich aber auch um Fahrzeuge handeln, die jeweils nur im Verbund mit einem oder mehreren anderen Fahrzeugen fahrtüchtig sind.

Das Übergangssystem umfasst einen Balg, der sich in Durchgangsrichtung des Übergangssystems erstreckt. Der Balg umspannt zumindest teilweise einen Innenraum des Übergangssystems, so dass dieser von einem Bereich außerhalb des Übergangssystems getrennt ist. Der Balg kann z. B. als Wellen- oder Faltenbalg ausgeführt sein. Ferner kann er als einfacher Balg oder auch als Doppelbalg mit einem innenliegenden Innenbalg und einem außenliegenden Außenbalg ausgeführt sein.

Das Übergangssystem weist außerdem ein Flächenelement auf, das im Innenraum des Übergangssystems beabstandet zu dem Balg angeordnet ist. Durch das Flächenelement kann z. B. der Balg von dem Innenraum aus gesehen verdeckt werden, so dass Passagiere keinen direkten Blick und/oder keine direkte Zugriffsmöglichkeit auf den Balg haben. Das Übergangssystem kann dabei lediglich ein Flächenelement aufweisen. Üblicherweise sind jedoch mehrere derartige Flächenelemente vorgesehen. Beispielsweise kann das Flächenelement eine Seitenwandelement, ein Deckenelement wie eine Gliederdecke mit mehreren zueinander verschieblich angeordneten Deckenteilen oder auch eine Übergangsplattform, z. B. eine Gliederbrück o. ä., sein. Das Flächenelement muss Bewegungen des Übergangssystems folgen können, wenn sich die Fahrzeuge relativ zueinander bewegen. Das Flächenelement ist dazu derart ausgebildet und angeordnet, dass es den im Betrieb auftretenden Relativbewegungen der beiden miteinander verbundenen Fahrzeuge folgen kann. Z. B. kann das Flächenelement dazu aus einem flexiblen Material ausgebildet sein, so dass es den Relativbewegungen entsprechend verformt werden kann. Weitere Möglichkeiten sind eine Ausführung mit mehreren beweglich miteinander verbundenen Teilen und/oder eine bewegliche Befestigung des Flächenelements an Strukturbauteilen des Übergangssystems.

Das Flächenelement ist in dem Innenraum in einem vorgegebenen Abstand zu dem Balg angeordnet, so dass sich ein Zwischenraum zwischen dem Flächenelement und dem Balg ergibt. Der Zwischenraum kann im Wesentlichen leer sein. Er kann jedoch auch dazu genutzt werden, um z. B. Versorgungsleitungen für Passagiere unzugänglich von dem einen Fahrzeug zu dem anderen Fahrzeug zu führen.

Erfindungsgemäß ist vorgesehen, dass in dem Zwischenraum mindestens ein Schallabsorber angeordnet ist. Mit dem Schallabsorber in dem Zwischenraum, der gemäß dem Stand der Technik oftmals komplett leer ist oder in Bezug auf den Schall irrelevante Bauteile wie Versorgungsleitungen angeordnet sind, lässt sich die Schalldämmung des Übergangssystems insgesamt wesentlich verbessern. Gleichzeitig beeinflusst die Anordnung des Schallabsorbers in dem Zwischenraum aber nicht die Beweglichkeit des Balgs. Auf den Balg wirken - als außenliegendes Element des Übergangssystems - die größten dynamischen Belastungen ein. Entsprechend muss dieser die größte Beweglichkeit aufweisen, wenn sich die Fahrzeuge relativ zueinander bewegen. Da der Schallabsorber nicht unmittelbar in Verbindung mit dem Balg steht, beeinträchtigt dieser nicht die Beweglichkeit des Balgs.

Der Schallabsorber kann frei hängend in dem Zwischenraum angeordnet sein, wobei dieser - außer ggf. bei starken Bewegungen des Übergangssystems mit entsprechender Veränderung der Abstände zwischen dem Balg und dem Flächenelement - weder mit dem Balg noch mit dem Flächenelement in direktem Kontakt ist. Der Schallabsorber kann aber auch an dem Flächenelement angeordnet sein. Z. B. kann der Schallabsorber auf das Flächenelement aufgeklebt sein oder auf andere Weise an diesem befestigt sein, beispielsweise durch Verschrauben oder Einstecken in Halteelemente, die an dem Flächenelement befestigt sind. Durch die in dem Zwischenraum angeordneten Schallabsorber kann insbesondere die Schalldämmung in Bezug auf Luftschall verbessert werden. Wenn der Schallabsorber an dem Flächenelement angeordnet ist, kann z. B. auch eine verbesserte Körperschalldämmung des Flächenelements erreicht werden.

Für eine gute Schalldämmung ist der Schallabsorber vorzugsweise so dimensioniert, dass er den Schall in dem jeweils relevanten Frequenzbereich besonders gut absorbiert. Eine gute Absorption wird ab in etwa einem Achtel der Wellenlänge des zu absorbierenden Schalls erreicht. Besonders gut wird der Schall absorbiert, wenn die Abmessungen des Schallabsorbers mindestens einem Viertel der Wellenlänge des zu absorbierenden Schalls entsprechen. Erfindungsgemäß kann der Schallabsorber insbesondere so dimensioniert sein, dass er zumindest in einer Raumrichtung und vorzugsweise in mindestens zwei Raumrichtungen jeweils eine Längserstreckung im Bereich von ca. 0,05 cm bis 100 cm und insbesondere im Bereich von 1 cm bis 50 cm aufweist. So lässt sich z. B. Schall mit Frequenzen im Bereich von 1 kHz bis 2 kHz gut dämpfen. Gleichzeitig sind die Abmessungen so dimensioniert, dass sich der Schallabsorber gut handhaben lässt und der Bauraum, der für den Schallabsorber vorgehalten werden muss, nicht zu groß wird. Erfindungsgemäß wurde erkannt, dass der Balg typischerweise insbesondere für Schall in diesem Frequenzbereich schlechtere Schalldämmeigenschaften aufweist als in angrenzenden Frequenzbereichen, so dass eine Verbesserung der Schalldämmung gerade in dem Frequenzbereich von 1 kHz bis 2 kHz durch gesonderte Maßnahmen besonders wichtig ist.

In Haupterstreckungsrichtung kann der Schallabsorber auch eine größere Längserstreckung aufweisen, z. B. im Bereich um 150 cm, wodurch der Schallabsorber auch für tiefere Frequenzen wirksam ist.

Wenn mehrere Schallabsorber vorgesehen sind, können diese in Bezug auf ihre Dimensionierung und/oder Form identisch ausgebildet sein. Diese können jedoch voneinander verschiedene Längserstreckungen und/oder Formen aufweisen, so dass verschiedene Frequenzbereiche für die Schallabsorption abgedeckt werden.

Wenn der Schallabsorber eine langgestreckte Form aufweist, kann er derart angeordnet sein, dass seine Haupterstreckungsrichtung im Wesentlichen quer zu der Durchgangsrichtung des Übergangssystems orientiert ist. So ist z. B. mit der geringsten dynamischen Beanspruchung des Schallabsorbers zu rechnen. Der Schallabsorber kann aber auch auf beliebige andere Weise orientiert sein.

Der Schallabsorber kann einen im Wesentlichen rechteckigen Querschnitt aufweisen. Es sind aber auch beliebige andere Querschnitte möglich. Z. B. kann der Querschnitt halbkreisförmig sein oder die Form eines Vielecks, z. B. eines Dreiecks, haben. Darüber hinaus kann der Schallabsorber auch eine gezielte Oberflächenstrukturierung aufweisen, wodurch die Größe der Oberfläche vergrößert und so die Schalldämmeigenschaften optimiert werden können.

Ferner kann der Schallabsorber derart ausgebildet sein, dass seine dem Zwischenraum zugewandte Seitenfläche eine im Wesentlichen sägezahnförmige oder wellenförmige Kontur aufweist. Dabei kann die so gebildete Kontur durch einen einzigen Schallabsorber oder auch durch mehrere nebeneinander angeordnete Schallabsorber realisiert sein. Eine weitere Möglichkeit ist eine stufenartige Kontur, welche ebenfalls durch einen einzigen Schallabsorber oder mehrere zueinander beabstandet angeordnete Schallabsorber realisiert sein kann.

Wenn mehrere Schallabsorber vorgesehen sind, können diese im Wesentlichen parallel zueinander orientiert und nebeneinander angeordnet sein. Insbesondere können die Schallabsorber einen vorgegebenen - konstanten oder variierenden - Abstand zueinander angeordnet sein. Durch die gebildeten Freiräume zwischen den Schallabsorbern kann z. B. verhindert werden, dass die Beweglichkeit des Flächenelements zu stark eingeschränkt wird.

Insbesondere kann ein mittlerer Abstand der Schallabsorber mindestens halb so groß sein wie eine mittlere Längserstreckung der Schallabsorber in Richtung des Abstands zum jeweils benachbarten Schallabsorber. Auch wenn zwischen mehreren Schallabsorbern Freiräume vorgesehen sind, kann bereits eine ausreichende Schalldämmung erreicht werden. Durch das Vorsehen von Freiräumen kann sogar eine verbesserte Schalldämmwirkung gegenüber einem durchgehenden Schallabsorber erreicht werden, da mehrere voneinander beabstandet angeordnete Schallabsorber eine größere Oberfläche zur Verfügung stellen, wodurch der Schall insgesamt besser absorbiert werden kann. Gleichzeitig wird durch die Freiräume ein Bewegungsspielraum geschaffen. Wenn die Schallabsorber z. B. nebeneinander an dem Flächenelement angeordnet sind, kann sich das Flächenelement bei ausreichendem Abstand zwischen den Schallabsorbern ungehindert verformen, z. B. infolge von Relativbewegungen der miteinander verbundenen Fahrzeuge. Insbesondere kann die Gefahr reduziert werden, dass die Schallabsorber bei einer Verformung des Flächenelements gegeneinander stoßen und z. B. beschädigt werden oder dass es zu einem verstärkten Verschleiß der Schallabsorber, z. B. aufgrund von Abrieb, kommt. Die Gefahr von Verschleiß und/oder Beschädigungen kann auch dadurch reduziert werden, wenn die Schallabsorber selbst aus einem flexiblen bzw. elastischen Material hergestellt sind, so dass Berührungen der Schallabsorber untereinander lediglich zu einer elastischen Verformung führen.

Der Schallabsorber kann grundsätzlich aus jedem beliebigen schallabsorbierenden Material hergestellt sein. Insbesondere eignet sich ein offenporiges Material, durch welches Schall besonders gut aufgenommen werden kann. Z. B. kann der Schallabsorber ein Leichtschaumbauteil sein. Konkret kann der Schallabsorber aus Melaminharzschaum hergestellt sein. Melaminharzschaum zeichnet sich einerseits durch besonders gute Schalldämmeigenschaften und andererseits auch durch gute Brandschutzeigenschaften aus.

Für die Anordnung des Schallabsorbers eignen sich insbesondere die folgenden Zwischenräume:
- der Zwischenraum zwischen dem Balg und einem Seitenwandelement des Übergangssystems, durch das der Durchgangsbereich des Übergangssystems seitlich begrenzt ist; das Seitenwandelement kann z. B. als flexible Seitenwand oder Schiebewand mit zueinander verschiebbaren Seitenwandteilen ausgebildet sein; und/oder
- der Zwischenraum zwischen dem Balg und einem Deckenelement, durch das der Durchgangsbereich nach oben hin begrenzt ist; das Deckenelement kann beispielsweise als Gliederdecke ausgebildet sein, mit zueinander verschiebbaren Deckenteilen; und/oder
- der Zwischenraum zwischen einem Boden des Balgs und einer Übergangsplattform, durch die eine begehbare Fläche für die Passagiere gebildet ist.

Neben der Anordnung von einem oder mehreren Schallabsorbern in dem Zwischenraum können für die Schalldämmung des Übergangssystems weitere Maßnahmen getroffen sein. Konkret können die aus dem Stand der Technik bekannten Maßnahmen umgesetzt sein. Z. B. kann für den Balg ein besonders schalldämmendes Material eingesetzt werden. Alternativ oder zusätzlich können schalldämmende Maßnahmen im Bereich der Stirnwände des Übergangssystems bzw. des Fahrzeugs getroffen sein, um eine besonders schalldämmende Verbindung zwischen dem Fahrzeug und dem Übergangssystem und/oder eine weiter optimierte Schalldämmung des Übergangssystems zu schaffen.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einem Schallabsorber die Rede ist, so ist dies so zu verstehen, dass genau ein Schallabsorber, zwei Schallabsorber oder mehrere Schallabsorber vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine Ausführungsform eines erfindungsgemäßen Übergangssystems in perspektivischer Darstellung.
- Figur 2: das Übergangssystem gemäß Figur 1 in einer weiteren perspektivischen Ansicht.
- Figur 3: ein Seitenwandelement des Übergangssystems gemäß Figur 1 in einer Ansicht von schräg vorne.
- Figur 4: das Seitenwandelement gemäß Figur 3 in einer Ansicht von schräg hinten.

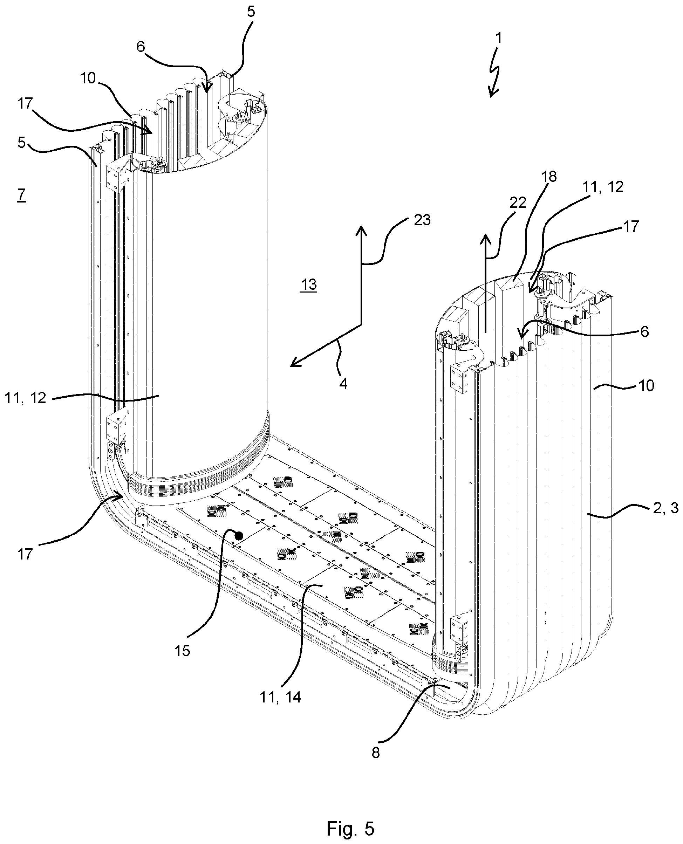

- Figur 5: das Übergangssystem gemäß Figur 1 in einer horizontal geschnittenen Ansicht

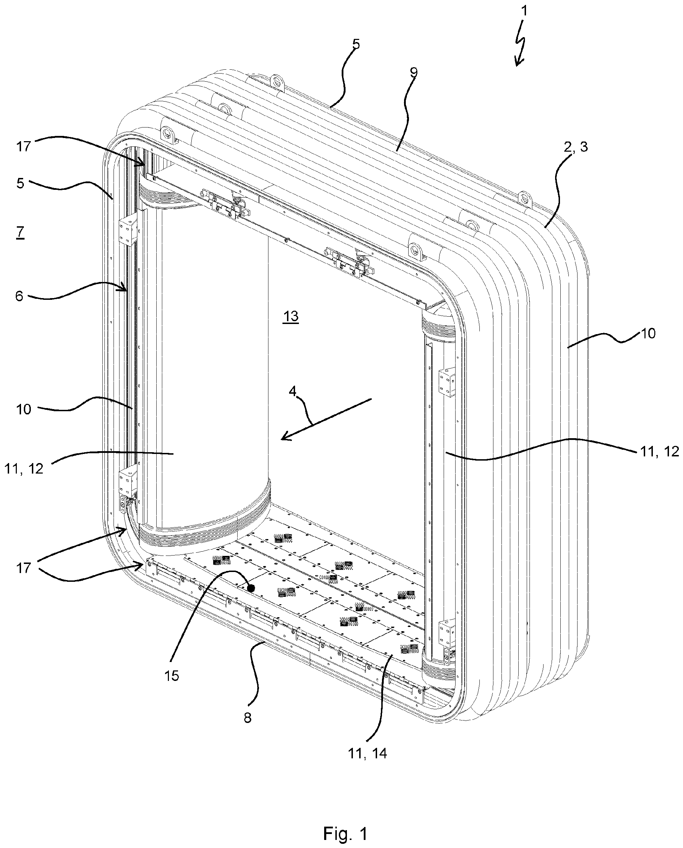

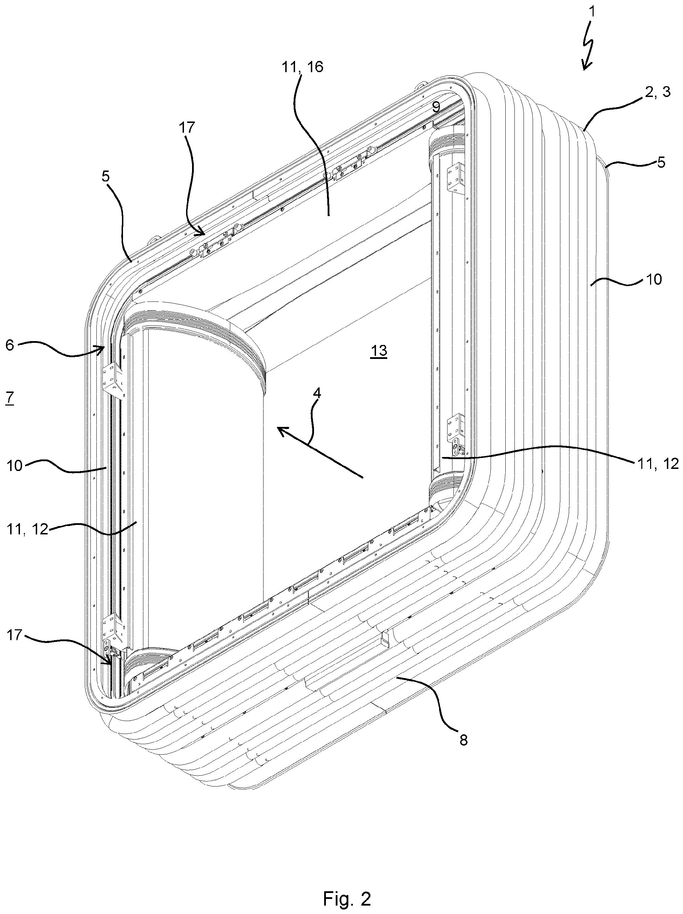

Die Figuren 1 und 2 zeigen eine Ausführungsform eines erfindungsgemäßen Übergangssystems 1. Das Übergangssystem 1 kann als Verbindungsstück zwischen zwei nicht dargestellte Fahrzeuge eines Fahrzeugverbunds eingesetzt werden, um Passagieren so einen sicheren Wechsel zwischen den beiden Fahrzeugen zu ermöglichen.

Das Übergangssystem 1 umfasst einen Balg 2. Bei dem dargestellten Ausführungsbeispiel ist der Balg 2 als einfacher Wellenbalg 3 ausgeführt. Zur Anbindung an die Fahrzeuge sind an den in Durchgangsrichtung 4 liegenden Stirnseiten Rahmen 5 vorgesehen, die mit entsprechend ausgebildeten Rahmen an den Stirnseiten der Fahrzeuge verbunden werden können. Der Balg 2 ist in der Durchgangsrichtung 4 gesehen umlaufend ausgebildet, so dass ein Innenraum 6 des Übergangssystems 1 gegenüber einem außerhalb des Balgs 2 liegenden Bereich 7 getrennt ist. Der Balg 2 ist bei dem dargestellten Ausführungsbeispiel vollständig umlaufend ausgebildet und weist einen Balgboden 8, eine Balgdecke 9 und zwei Balgseitenwände 10 auf, die den Innenraum 6 begrenzen.

Im Bereich des Innenraums 6 weist das Übergangssystem 1 mehrere Flächenelemente 11 auf. Konkret sind zwei flexible Seitenwandelemente 12 vorgesehen, welche beabstandet zu den Balgseitenwänden 10 angeordnet sind und die einen Durchgangsbereich 13 des Übergangssystems 1 seitlich begrenzen. Außerdem ist eine Übergangsplattform 14 vorgesehen, welche oberhalb des Balgbodens 8 und beabstandet zu diesem angeordnet ist und welche eine begehbare Fläche 15 für die Passagiere bildet. Schließlich ist - wie in Figur 2 gezeigt - ein Deckenelement 16 vorgesehen, das in einem Abstand unterhalb der Balgdecke 9 angeordnet ist und den Durchgangsbereich 13 nach oben hin begrenzt. Durch die Flächenelemente 11 wird z. B. erreicht, dass die dahinterliegenden Bauteile und insbesondere der Balg 2 für Passagiere nicht sichtbar und auch nicht zugänglich sind. Die Flächenelemente 11 wirken somit als eine Art Verkleidung, wobei die Übergangsplattform 14 zusätzlich die Funktion hat, die begehbare Fläche 15 für die Passagiere bereitzustellen.

Die Flächenelemente 11 sind - ähnlich wie der Balg 2, wenn auch ggf. in geringerem Umfang - beweglich ausgebildet, so dass die Flächenelemente 11 den Relativbewegungen der beweglich miteinander verbundenen Fahrzeuge folgen können. Die Beweglichkeit kann z. B. durch eine flexible Ausbildung der Flächenelemente 11 erreicht werden, wie es bei dem gezeigten Ausführungsbeispiel bei den Seitenwandelementen 12 der Fall ist. Konkret können sich diese entsprechend den auftretenden Relativbewegungen wölben bzw. strecken und/oder seitlich aufrollen bzw. abrollen. Eine andere Möglichkeit ist die Ausgestaltung mit mehreren beweglich zueinander und überlappend angeordneten Bauteilen, wie dies im gezeigten Ausführungsbeispiel bei dem Deckenelement 9 und der Übergangsplattform 14 der Fall ist.

Wie in den Figuren 1 und 2 gezeigt, sind die Flächenelemente 11 in dem Innenraum 6 jeweils in einem Abstand zu dem Balg 2 angeordnet. Es ergeben sich somit jeweils Zwischenräume 17 zwischen den Flächenelementen 11 und dem Balg 2. Die Zwischenräume 17 können z. B. dazu genutzt werden, um Versorgungsleitungen von dem einen Fahrzeug zu dem anderen Fahrzeug zu führen. Auch können im Bereich der Zwischenräume 17 Aufhänge- und/oder Zentriersysteme für den Balg 2 bzw. die Flächenelemente 11 und/oder Verbindungsmittel, wie Gelenke oder Kupplungen, zum Verbinden der beiden Fahrzeuge vorgesehen sein.

Erfindungsgemäß ist in mindestens einem Zwischenraum 17 mindestens ein Schallabsorber angeordnet (in den Figuren 1 und 2 nicht gezeigt). Der Schallabsorber dient dabei dazu, die Schalldämmung des Übergangssystems 1 zu verbessern, so dass Passagiere in dem Übergangssystem 1 besser von dem auftretenden Schall abzuschirmen, der insbesondere bei Fahrten mit hohen Geschwindigkeiten immer stärker wird. Die Schallabsorber können dabei insbesondere aus einem offenporigen Material, z. B. einem Leichtschaum, ausgebildet sein, welches besonders gute Schalldämmeigenschaften aufweist.

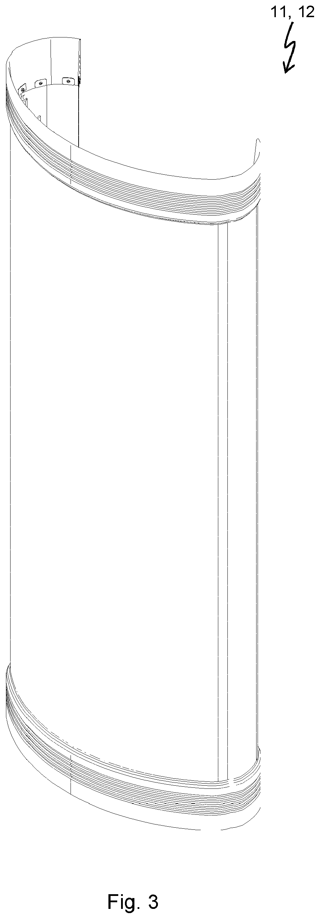

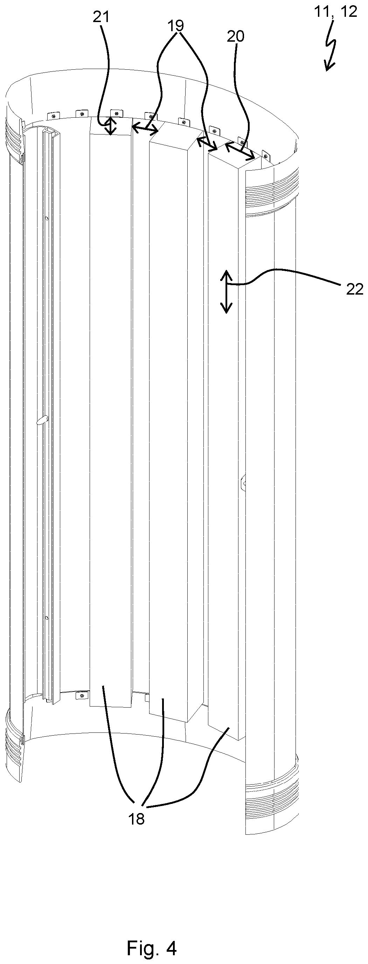

In den Figuren 3 und 4 ist eines der beiden Seitenwandelemente 12 des Übergangssystems 1 im Detail dargestellt. Konkret ist das Seitenwandelement 12 in Figur 3 von schräg vorne und in Figur 4 von schräg hinten gezeigt. Wie in Figur 3 gezeigt, weist das Seitenwandelement 12 auf seiner dem Durchgangsbereich 13 zugewandten Seite eine gewölbte, aber im Wesentlichen plane Fläche auf. Die Rückseite des Seitenwandelements 12 ist, wie in Figur 4 gezeigt, ebenfalls im Wesentlichen plan. Allerdings sind dort mehrere streifenförmige Schallabsorber 18 an dem Seitenwandelement 12 angeordnet. Die Schallabsorber 18 können auf das Seitenwandelement 12 aufgeklebt sein, z. B. mittels doppelseitigem Klebeband.

Die Schallabsorber 18 sind länglich ausgebildet und weisen einen rechteckigen Querschnitt auf. Die Schallabsorber 18 sind nebeneinander und im Wesentlichen parallel zueinander an dem Seitenwandelement 12 befestigt. Ein mittlerer Abstand 19 zwischen den Schallabsorbern 18 ist dabei in etwa konstant. Der Abstand 19 ist dabei mehr als halb so groß wie eine mittlere Längserstreckung 20 der Schallabsorber 18 in Richtung des Abstands 19. So wird erreicht, dass sich auch bei einer stärkeren Wölbung des Seitenwandelements 18, wie sie im Betrieb infolge von Relativbewegungen der beiden Fahrzeuge z. B. bei einer Kurvenfahrt auftreten kann, die Schallabsorber 18 nicht oder zumindest nur in Ausnahmefällen miteinander in Berührung kommen. So kann die Gefahr von Beschädigungen der Schallabsorber 18 bzw. von einem vorzeitigen Verschleiß reduziert werden.

Die Dimensionierung der Schallabsorber 18 ist so gewählt, dass insbesondere Schall mit einer Frequenz aus dem Bereich zwischen 1 kHz und 2 kHz gut absorbiert wird. Dies ist gerade der Frequenzbereich, bei dem die Schalldämmung des Balgs 2 weniger wirksam ist. D. h. durch das Zusammenspiel eines schalldämmenden Balgs 2 und den Schallabsorbern 18 in den Zwischenräumen 17 kann insgesamt eine gute Schalldämmung des Übergangssystems 1 über den gesamten relevanten Frequenzbereich erreicht werden. Konkret können die Längserstreckungen 20, 21 im Querschnitt der Schallabsorber 18 im Bereich von 5 cm bis 50 cm liegen. In Haupterstreckungsrichtung 22 können die Schallabsorber 18 auch länger ausgebildet sein, um so über die gesamte Länge des Seitenwandelements 12 eine Schalldämmung bereitzustellen.

In Figur 4 ist ein Horizontalschnitt des Übergangssystems 1 gezeigt. Wie aus Figur 4 ersichtlich, sind die Schallabsorber 18 im Einbauzustand im Wesentlichen so orientiert, dass deren Haupterstreckungsrichtung 22 im Wesentlichen vertikal und insbesondere im Wesentlichen quer zu der Durchgangsrichtung 4 orientiert ist. So wird erreicht, dass in Richtung der größten Längserstreckung der Schallabsorber 18 die geringsten Belastungen auf die Schallabsorber 18 wirken, denn im Betrieb ist in dieser Richtung mit den geringsten Bewegungen zu rechnen. Vielmehr findet eine Bewegung der Seitenwandelemente 12 und somit der daran angeordneten Schallabsorber 18 vornehmlich in Form einer Drehbewegung um eine vertikale Achse 23 statt.

### Bezugszeichenliste:

- 1: Übergangssystem
- 2: Balg
- 3: Wellenbalg
- 4: Durchgangsrichtung
- 5: Rahmen
- 6: Innenraum
- 7: Bereich
- 8: Balgboden
- 9: Balgdecke
- 10: Balgseitenwand
- 11: Flächenelement
- 12: Seitenwandelement
- 13: Durchgangsbereich
- 14: Übergangsplattform
- 15: begehbare Fläche
- 16: Deckenelement
- 17: Zwischenraum
- 18: Schallabsorber
- 19: Abstand
- 20: Längserstreckung
- 21: Längserstreckung
- 22: Haupterstreckungsrichtung
- 23: vertikale Achse

## Patentansprüche

1. Übergangssystem (1) zur Anordnung zwischen zwei beweglich miteinander verbundenen Fahrzeugen mit
- einem Balg (2), der sich in Durchgangsrichtung (4) des Übergangssystems (1) erstreckt und durch den ein Innenraum (6) des Übergangssystems (1) von einem Bereich (7) außerhalb des Übergangssystems (1) getrennt ist,
- mindestens einem Flächenelement (11), das im Innenraum (6) beabstandet zu dem Balg (2) angeordnet ist und das derart ausgebildet ist, dass es im Betrieb auftretenden Relativbewegungen der beiden miteinander verbundenen Fahrzeuge folgen kann, und
- einem Zwischenraum (17), der zwischen dem Balg (2) und dem mindestens einen Flächenelement (11) gebildet ist,
**dadurch gekennzeichnet, dass**
in dem Zwischenraum (17) mindestens ein Schallabsorber (18) angeordnet ist.

2. Übergangssystem (1) nach Anspruch 1,
**dadurch gekennzeichnet, dass**
der Schallabsorber (18) an dem Flächenelement (11) angeordnet ist.

3. Übergangssystem (1) nach einem der vorhergehenden Ansprüche,
**dadurch gekennzeichnet, dass**
der Schallabsorber (18) in mindestens einer Raumrichtung und vorzugsweise in mindestens zwei Raumrichtungen jeweils eine Längserstreckung (20, 21) im Bereich von 0,3 cm bis 100 cm, insbesondere im Bereich von 5 cm bis 50 cm, aufweist.

4. Übergangssystem (1) nach einem der vorhergehenden Ansprüche,
**dadurch gekennzeichnet, dass**
der Schallabsorber (18) eine langgestreckte Form aufweist und der Schallabsorber (18) derart orientiert ist, dass seine Haupterstreckungsrichtung (22) im Wesentlichen quer zu der Durchgangsrichtung (4) des Übergangssystems (1) orientiert ist.

5. Übergangssystem (1) nach einem der vorhergehenden Ansprüche,
**dadurch gekennzeichnet, dass**
der Schallabsorber (18) einen im Wesentlichen rechteckigen Querschnitt aufweist.

6. Übergangssystem (1) nach einem der vorhergehenden Ansprüche,
**dadurch gekennzeichnet, dass**
eine dem Zwischenraum (17) zugewandte Seitenfläche des Schallabsorbers (18) eine im Wesentlichen sägezahnförmige oder wellenförmige Kontur aufweist.

7. Übergangssystem (1) nach einem der vorhergehenden Ansprüche,
**dadurch gekennzeichnet, dass**
mehrere Schallabsorber (18) vorgesehen sind, die beabstandet zueinander angeordnet sind.

8. Übergangssystem (1) nach Anspruch 7,
**dadurch gekennzeichnet, dass**
ein mittlerer Abstand (19) der Schallabsorber (18) mindestens halb so groß ist wie eine mittlere Längserstreckung (20) der Schallabsorber (18) in Richtung des Abstands (19).

9. Übergangssystem (1) nach einem der vorhergehenden Ansprüche,
**dadurch gekennzeichnet, dass**
der Schallabsorber (18) aus einem offenporigen Material hergestellt ist und/oder ein Leichtschaumbauteil aufweist.

10. Übergangssystem (1) nach einem der vorhergehenden Ansprüche,
**dadurch gekennzeichnet, dass**
das Flächenelement (11)
- ein Seitenwandelement (12) des Übergangssystems (1) ist, durch das ein Durchgangsbereich (13) seitlich begrenzt ist, oder
- ein Deckenelement (16) des Übergangssystems (1) ist, durch das ein/den Durchgangsbereich (13) nach oben hin begrenzt ist, oder
- eine Übergangsplattform (14) des Übergangssystems (1) ist, durch die eine begehbare Fläche (15) gebildet ist.
